**Europäisches Patentamt**

**European Patent Office**

**Office européen des brevets**

(19)

(11) Publication number : **0 498 548 A1**

# (12) EUROPEAN PATENT APPLICATION

(21) Application number : **92300661.3**

(22) Date of filing : **27.01.92**

(51) Int. Cl.⁵ : **B65G 17/32, B65G 17/06**

(30) Priority : **02.02.91 GB 9102304**
**28.11.91 GB 9125279**

(43) Date of publication of application :
**12.08.92 Bulletin 92/33**

(84) Designated Contracting States :
**DE ES FR GB IT NL**

(71) Applicant : **APV CORPORATION LIMITED**
**Manor Drive, Paston Parkway**
**Peterborough PE4 7AP (GB)**

(72) Inventor : **Wiggins, Christopher Neville**
**11 St Martins, Castle Bytham**
**Grantham, Lincolnshire NG33 4RH (GB)**
Inventor : **Gardam, Jonathan Edward**
**82 Church Street**
**Deeping St James, Peterborough PE6 8HD**
**(GB)**

(74) Representative : **Lomas, Geoffrey Michael et al**
**Barker, Brettell & Boutland Prudential**
**Buildings, room 24 97-101 Above Bar Street**
**Southampton SO9 4GT (GB)**

(54) **Conveyor.**

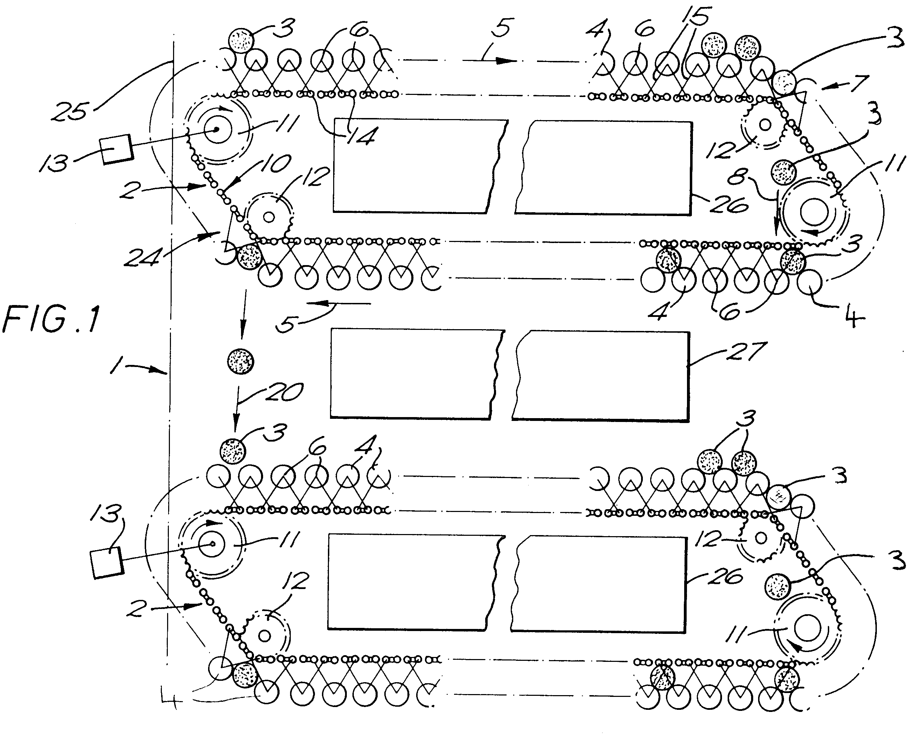

(57)    With reference to Figure 1, a conveyor assembly 1 comprises two conveyors 2 of identical form, one disposed above the other. The conveyors 2 transport sausages 3, disposed in rows, extending normal to the plane of the figure.

Each conveyor 2 comprises a plurality of parallel-disposed rollers 4 movable along an endless path 5 of trapezoidal form. The conveyor is formed and constructed whereby the lateral spacing between a co-operating pair of rollers 4 at the end of the upper run is temporarily enlarged, so as to allow a row of sausages 3 to pass between the pair and onto rollers 4 of the return or lower run below, as indicated by the arrow 8.

FIG.1

**EP 0 498 548 A1**

## BACKGROUND TO THE INVENTION

This invention relates to conveyors and is concerned with conveyors for transporting products of rounded cross-section, comprising a plurality of parallel-disposed rollers movable along a path disposed substantially normal to the longitudinal axes of the rollers, the rounded products being supportable by a co-operating pair of rollers, the paths comprising an upper forward run superimposed on a lower return run.

## SUMMARY OF THE INVENTION

According to the invention a conveyor for transporting products of rounded cross-section comprises a plurality of parallel-disposed rollers movable along a path disposed substantially normal to the longitudinal axes of the rollers, the rounded products being supportable by a co-operating pair of rollers, the paths comprising an upper forward run superimposed on a lower return run, the conveyor being operable whereby the rollers of the lower return run can be used to carry the products.

The conveyor may be provided with means for enlarging the lateral spacing between the longitudinal axes of a co-operating pair of rollers of the upper forward run so as to allow a product supported by the pair to pass between the pair and on to the rollers of the return run below.

The conveyor may be further provided with means for assisting transfer of products from the upper run to the lower run, said transfer means comprising a structure rotatable about an axis substantially parallel to the longitudinal axes of the rollers, and defining a plurality of pockets for receiving the products.

The rounded products transported by a conveyor may be protein products of elongated form, for example, sausages or frankfurters.

## BRIEF DESCRIPTION OF THE DRAWINGS

An embodiment of the invention will now be described, by way of example only, with reference to the accompanying drawings, wherein:

Figure 1 is a semi-diagrammatic side view of a conveyor assembly, comprising two conveyors, each in accordance with the invention,

Figure 2 is an enlarged view of the upper conveyor of Figure 1,

Figures 3 and 4 are side views, in perspective, and illustrate further details, and

Figure 5 is a fragmentary side view which illustrates a modification.

## DETAILED DESCRIPTION OF THE PREFERRED EMBODIMENT

With reference to Figure 1, a conveyor assembly 1 comprises two conveyors 2 of identical form, one disposed above the other. The conveyors 2 transport food products 3 of rounded, elongate form, comprising sausages. The products 3 are disposed in lateral rows, extending normal to the plane of Figure 1.

Referring, for convenience, to the upper conveyor 2 only at this stage, the conveyor comprises a plurality of parallel-disposed and rotatable rollers 4 movable along an endless path 5 disposed substantially normal to the longitudinal axes 6 of the rollers. The endless path 5 is trapezoidal in side view, and comprises an upper forward run moving from left to right, superimposed on a lower return run, moving from right to left.

Each row of sausages 3 is supported by a co-operating pair of adjacent rollers 4. Each roller forms a pair with a roller in front as well as with a roller behind. The rollers 4 are rotatable about their longitudinal axes 6

The conveyor 2 is formed and constructed so as to provide itself with means 7, operable whereby the rollers 4 of the lower or return run can be used to carry the products 3 as well. As explained hereinafter, the means 7 are operable to enlarge the lateral spacing between a co-operating pair of rollers 4 at the end of the upper or forward run, so as to allow a row of sausages 3 supported by the pair to pass between the pair and onto a pair of rollers 4 of the return run below, as indicated by the arrow 8.

The conveyor 2 further comprises a pair of laterally-spaced endless chains 10, which passes over a pair of laterally-spaced main sprocket wheels 11, as well as a pair of intermediate sprocket wheels 12. The wheels 11, 12 are disposed so as to give the conveyor path 5 its trapezoidal form. The chains 10 are driven by drive means 13.

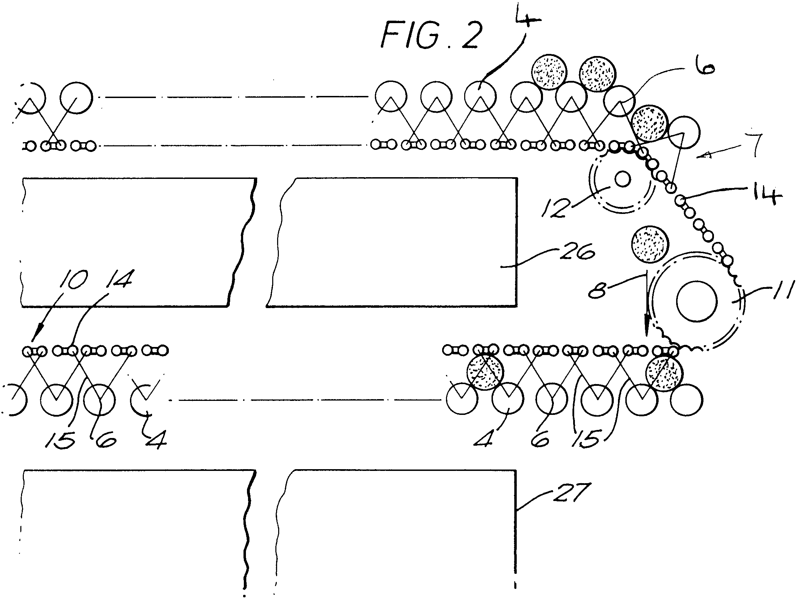

With additional reference to Figure 2, each chain 10 comprises a plurality of links 14, interconnected by coupling pins, in the usual manner. Each roller 4 is connected to a respective pair of alternate links 14 of the chain 10 by pairs of pivotally-mounted supports 15. The roller ends of the supports 15 of a pair are pivotally interconnected on the longitudinal axis 6 of the associated roller 4, while the opposite ends of the pair are joined to the interconnecting coupling pins of alternate links 14, so that the supports 15 diverge away from the roller. The supports 15 of one roller are connected to the 'leading' coupling pins of a pair of chain links 14, while the supports 15 of the next roller in line are connected to the 'trailing' coupling pins of a pair of chain links.

As the chains 10 move so as to carry the rollers 4 around the path 5, the lateral spacing or pitch between the longitudinal axes 6 of a co-operating pair of rollers 4 is temporarily enlarged as it passes around the sprocket wheels 12 at the end of the forward run. This enlargement is sufficient to allow a row of sausages 3 to fall between the rollers, as indicated by the arrow 8. After the rollers negotiate the sprocket wheels 11 they return to their original spacing.

The sausages 3 fall on to the rollers 4 of the return run beneath and are then carried on the upper surfaces of the rollers 4 to where the next pair of sprocket wheels 12 cause the roller pairs to open up once again. Thus the conveyor 2 is formed and constructed so as to provide itself with means, generally indicated by reference numeral 24, operable so as to enlarge once more the lateral spacing between a co-operating pair of rollers 4. In this case however, the means 24 operate to release the sausages 4 so that they fall upon the forward run of the conveyor 2 below, as indicated by the arrow 20.

The cycle is then repeated.

The conveyor assembly 1 is housed within a heatable enclosure, comprising an oven 25, the casing of which is represented by a chain-dotted line.

The interior of the oven 25 is heated by hot air circulated in chambers 26, 27. Heat is transferred to the sausages 3 by conduction from the rollers 4, which are heated by radiation and convection. Forced convection may be provided so as to further increase heat transfer.

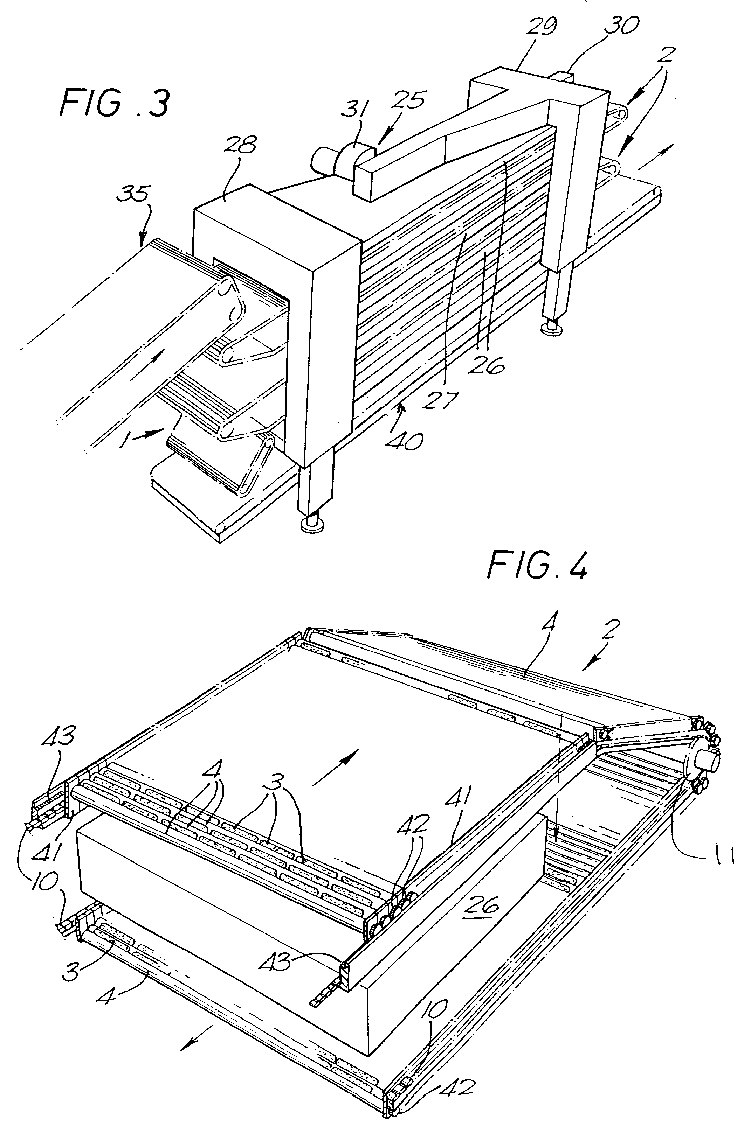

Figure 3 shows the oven 25 with its outer casing removed. The chambers 26, 27 (Figure 1) are connected to ducts 28, 29. A gas burner 30 and circulating fan 31 form other parts of the oven heating system.

Raw sausages are fed to the conveyor assembly 1 by an endless band conveyor 35, and are provided by a raw sausage moulding machine (not shown) of the form disclosed by GB 2,004,454, the sausages being formed without casings.

From the return pass of the lower conveyor 2, the cooked sausages are transferred to a cooler by means of an endless band conveyor 40. The sausages may be cooled in passage using water sprays.

Figure 4 shows part of a conveyor 2. It also shows how the rollers 4 are rotated. In this figure the ends of the rollers 4 are rotatably supported by blocks 41 carried by the links of the chains 10. Sprockets 42 are mounted on the roller ends and engage with fixed chains 43 in a rack and pinion-like manner so that, as the rollers move along, the sprockets 42 are caused to rotate. This roller rotation causes rotation of the sausages 3 in turn.

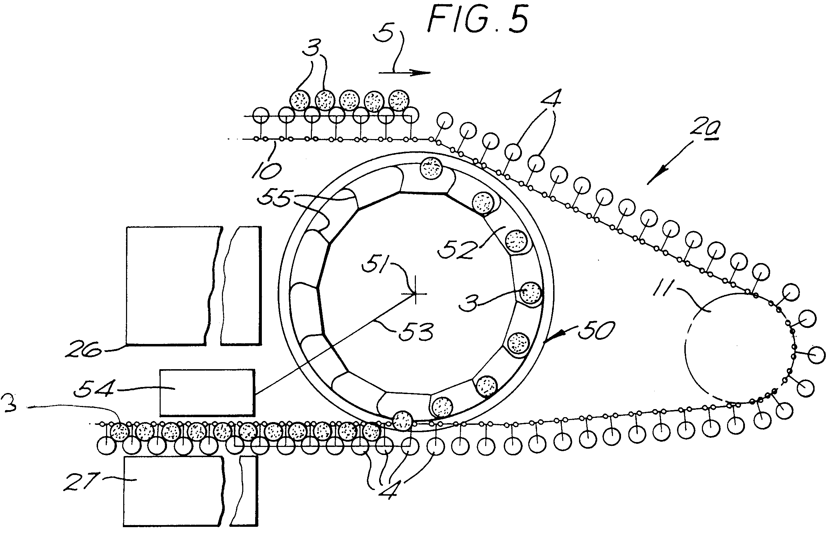

Figure 5 illustrates a modified conveyor 2a. To assist accuracy of transfer of products 3 from the upper run to the lower run, transfer means are provided, comprising a structure 50 rotatable about an axis 51 disposed substantially parallel to the longitudinal axes 6 (Figure 1) of the rollers 4.

The structure 50 is of cylindrical form and defines a plurality of pockets 52 for receiving the products 3.

The structure 50 is rotated, in timed sequence with the chains 10, by a shaft 53 driven by a motor 54.

The structure 50 is disposed between the upper and lower runs of the conveyor and is rotated so that, in operation, products 3 falling from the upper run enter the uppermost pocket 52, and are then carried around by the structure 50 to be deposited onto the rollers 4 of the return run.

The structure 50 resembles a stern-mounted paddle wheel of a river boat wherein circumferentially-spaced peripheral blade-like plates 55 of curved form define the pockets 52.

The wheels 12 (Figure 1) are dispensed with in this modification.

The invention has several advantages, including a more compact conveyor, which stems from use of the return run to carry products.

## Claims

1. A conveyor (2) for transporting products (3) of rounded cross-section comprising a plurality of parallel-disposed rollers (4) movable along a path (5) disposed substantially normal to the longitudinal axes (6) of the rollers (4), the rounded products (3) being supportable by a co-operating pair of rollers (4), the path (5) comprising an upper forward run superimposed on a lower return run, characterised in that means (7) are provided for enlarging the lateral spacing between the longitudinal axes (6) of a co-operating pair of rollers (4) of the upper forward run so as to allow a product (3) supported by the pair to pass between the pair and on to the rollers (4) of the return run below.

2. A conveyor as claimed in claim 1, characterised in that the enlarging means (7) are provided by the form and construction of the conveyor (2) itself.

3. A conveyor as claimed in claim 1 characterised in that it is provided with means (50) for assisting transfer of products (3) from the upper run to the lower run, said transfer means (50) comprising a structure rotatable about an axis (51) disposed substantially parallel to the longitudinal axes (6) of the rollers (4), and defining a plurality of pockets (52) for receiving the products (3).

4. A conveyor as claimed in any one of claims 1 to 3 characterised in that the rollers (4) are rotatable about their longitudinal axes (6).

5. A conveyor as claimed in any one of claims 1 to 4, characterised in that it is housed within a heatable enclosure (25).

6. A conveyor as claimed in any one of claims 1 to 5, characterised in that the rollers (4) are supported from a conveyor chain (10) by the outer ends of support means (15) linked to the conveyor chain (10), the support means (15) upstanding from the conveyor chain over the forward run, and the spacing between the outer ends of adjacent support means (15) being increased by taking the chain around an arc.

7. A conveyor assembly, characterised in that it is constituted by at least two superimposed conveyors (2) each according to any one of claims 1 to 6, and is provided with means (24) for transferring products from the return run of the upper conveyor (2) on to the forward run of the lower conveyor (2).

FIG.1

EP 0 498 548 A1

FIG. 2

6

FIG .3

FIG. 4

FIG. 5

EP 0 498 548 A1

| European Patent Office | EUROPEAN SEARCH REPORT | Application Number |
|---|---|---|
| | | EP 92 30 0661 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-992 684 (RENONDIN LOSSON & CIE) * page 2, left column, paragraph 4; figures 3,5,5A,8 * | 1,2 | B65G17/32 B65G17/06 |
| Y | idem | 3,5,7 | |
| A | idem | 4,6 | |
| | --- | | |
| X | FR-A-1 198 003 (ETS J.-J. CARNAUD & FORGES DE BASSE-INDRE) * page 4, right column, paragraph 3; figure 4 * | 1,2 | |
| Y | * page 1, left column, paragraph 3 * | 5 | |
| Y | * page 4, right column, paragraph 6; figure 14 * | 3,7 | |
| | ----- | | |
| | | | TECHNICAL FIELDS SEARCHED (Int. Cl.5 ) |
| | | | B65G |

The present search report has been drawn up for all claims

| Place of search | Date of completion of the search | Examiner |
|---|---|---|
| THE HAGUE | 29 APRIL 1992 | BEERNAERT J.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)